# EUROPEAN PATENT SPECIFICATION

(11) **EP 0 566 862 B1**
(45) Date of publication and mention of the grant of the patent: **02.08.1995**
(21) Application number: 93104164.4
(22) Date of filing: 15.03.1993
(51) Int. Cl.: G21C 17/07, G21C 17/06, G01L 1/25

(54) **Method and apparatus for detection of failed fuel rods by the use of acoustic energy wave attenuation**
Verfahren und Vorrichtung zum Auffinden von fehlerhaften Brennstäben mit Hilfe von Dämpfungen akustischer Wellen
Méthode et dispositif pour détecter des barreaux combustibles faillis par utilisation d'une atténuation de l'énergie d'ondes acoustiques

(30) Priority: 26.03.1992 US 858265
(43) Date of publication of application: 27.10.1993
(73) Proprietor: Siemens Power Corporation, Richland, WA 99352 (US)
(72) Inventor: McClelland, Richard G., Richland, WA 99352 (US)
(74) Representative: Fuchs, Franz-Josef, Dr.-Ing.

(56) References cited:
- EP-A- 0 018 290
- EP-A- 0 082 102
- EP-A- 0 115 231
- EP-A- 0 178 860
- EP-A- 0 229 837
- MESURES REGULATION AUTOMATISME, vol. 46, no. 5, May 1981, PARIS FR, pages 63-67, A. MADELAINE 'Détermination des contraintes superficielles par mesure de la vitesse de propagation d'ondes de Rayleigh'

## Description

The present invention relates to a system and method for detecting failed fuel rods and, in particular, it relates to a system and method for providing a relative measure of internal fuel rod pressure by measuring the frequency dependent attenuation of an acoustic energy spectrum so that a failed fuel rod may be detected.

### Background Art

Detection of defects in nuclear fuel rods is normally performed by either ultrasonic testing or sipping. In ultrasonic testing, water in the fuel rods (indicating failure) is detected by measuring the difference in attenuation of the ultrasonic energy returned from a water (failed rod) or gas (sound rod) interface of the cladding interior wall. An example of this approach is set forth in U.S. Patent 4,879,088, assigned to the same assignee as that of the present invention. In sipping, wet or dry, the method detects fission gases being released from a failed rod. In either case, conditions exist, such as pellet clad interaction or extremely small leaks, that limit the effectiveness of both methods.

U.S. Patent 4,126,514 discloses a method for detecting defective fuel elements by isolating from contact the exterior surface of a fuel element cladding from the cooling liquid normally employed and then making a pulsed echo attenuation measurement to identify the presence of excessively swollen fuel pellets. The measure of the presence of either cooling liquid within the element or a number of swollen fuel pellets is achieved by appropriate interpretation of echo pulses.

U.S. Patent No. 3,350,271 discloses a nuclear reactor transducer which contains a liquid therein such that heat transfer to the transducer heats the liquid. Under normal operating conditions, the pressure keeps the liquid as a liquid. Boiling of the liquid in the transducer, detected ultrasonically, could be used as an indication of the attainment of a predetermined pressure. Should there be a leak in the fuel rod, there would be a drop in pressure and, thus, the liquid would vaporize and expand through an orifice to indicate that a leak has occurred.

Neither U.S. patent mentioned immediately above measures stress by ultrasonic means to determine the internal pressure of a fuel rod as will be described below in accordance with the present invention.

U.S. Patent 4,009,616 is directed to an acoustic method for measuring gas pressure in a hermetically sealed enclosure. This is done by determining the velocity change and attenuation of an ultrasonic signal caused by the internal gas pressure within the enclosure (fuel rod). This process requires that the signal be transmitted through the gas and the effects of the signal received through the cladding be minimized. This differs from the below described apparatus and method of the present invention which measures the relative stress in the fuel cladding material which is a resultant of the internal gas pressure. Additionally, the process of U.S. Patent 4,009,616 is impractical for actual use since virtually all fuel rods have plenum springs in the area mentioned which would either totally block or destroy all necessary information contained in the acoustic data (i.e. velocity and attenuation).

### SUMMARY OF THE INVENTION

It is an object of the present invention to overcome the difficulties of the prior art fuel rod failure detection methods and to provide a more reliable and repeatable rod failure detection method and system.

In accordance with the present invention, a system for the detection of failed nuclear fuel rods comprises transmitter means for providing a source of pulsed electrical energy and first transducer means responsive to the transmitter means for applying pulsed ultrasonic energy of a specified frequency directly to external cladding of a nuclear fuel rod. Second transducer means, spaced apart from the first transducer means, receives ultrasonic energy transmitted through and along the fuel rod and provides an electrical signal in response thereto. The second transducer means are positioned adjacent the external cladding of the nuclear fuel rod. Receiving means are included, which are responsive to the signal from the second transducer, for processing high and low frequency components of said signal and for providing an output signal. A gated multi-channel spectrum analyzer is responsive to the output signal of the receiving means for determining the spectral component of the received ultrasonic energy over a lower and a higher frequency range and for producing resultant signals proportional to the amplitude of each frequency component. The resultant signals are a measure of the stress of the cladding and consequent pressure differentials so that any loss of fuel rod gas pressure will be a direct measure of fuel cladding failure.

For a better understanding of the present invention, reference is made to the following description and drawings.

### BRIEF DESCRIPTION OF THE DRAWINGS

In the drawings:
Figure 1 represents a simplified block diagram of the apparatus of the present invention;
Figures 2 and 3 illustrate actual data obtained from a low pressure and two high pressure fuel rods.

### DESCRIPTION OF THE PREFERRED EMBODIMENTS

The system and method of the present invention generally measures the relative stress in the cladding of a nuclear fuel rod caused by the internal gas pressure in the rod. This is done by determining the attenuation ratio of two specific frequencies from a broadband low frequency acoustic energy spectrum. Relative pressure differentials are measurable and therefore any loss of fuel rod gas pressure is a direct indication of fuel rod cladding failure.

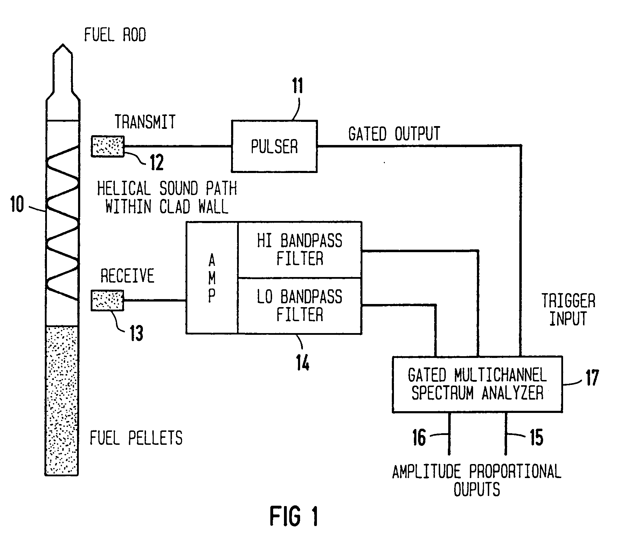

Referring to Figure 1, the system of the present invention is shown. A fuel rod 10 is under test by applying broadband pulsed ultrasonic energy to the fuel rod. This is accomplished by supplying electrical energy from a transmitter 11 to first acoustic transducer 12. The transmitter is preferably in the form of piezoelectric crystal which operates at a resonant frequency of 300 Khz. A second acoustic transducer 13, spaced apart from the first acoustic transducer, functions as a receiving element. Both transducers are aligned on the plenum region 10 as to produce a multi turn helical acoustic path around the fuel rod plenum region. The transducers are not normally in direct contact with the fuel rods. To minimize near field effect of the transducers, a gap of 1.3 mm (0.050 inch) is maintained. This distance, however, is not critical. Acoustic transducer 13 supplies its energy to a receiver 14 comprising an amplifier section and high and low bandpass filters. The filter outputs are then supplied to a gated multi-channel spectrum analyzer 17 with appropriate band- pass filters. The spectrum analyzer 17 is gated by a signal from the transmitter 11.

The transmitter is pulsed at a predetermined rate and the frequency spectrum of the energy conveyed through the cladding is received by the receiving crystal of the second transducer which in turn is supplied through receiver 14 to the spectrum analyzer 17. The spectrum analyzer 17 filters the two frequency bands of interest and produces signals 15, 16 proportional to the amplitude of each frequency component. The attenuation of the lower frequencies, ≈ 100 Khz, is more pronounced than the higher frequencies due to stress factors in the cladding. The amount of attenuation of the lower frequencies directly relates to the stresses (or internal gas pressure) of the cladding.

Specific tests were run by the inventor to determine whether the presence or absence of 345 x 10⁴ N/m² (500 psi) gas (the maximum expected at the end of life of a PWR fuel rod; during fuel cycles the pressure in the sound fuel rods can only increase due to fission gas release from the pellets) inside Zircaloy 4 inert fuel rods. Five rods, all having internal springs, one having zero pressure, one having 414 x 10³ N/m² (60 psi) pressure, one having 27 x 10⁵ N/m² (390 psi) pressure and two having high unspecified pressures, constituted the experimental samples. PWR rods are typically filled with ≈ 27 x 10⁵ N/m² (390 psi). BWR rods are typically filled with ≈ 414 x 10³ N/m² (60 psi). The tests were run in a water bath. It should be understood that measurements do not have to be made underwater as long as there is an acceptable coupling medium to pass the acoustic signal. For application to irradiated nuclear fuel, all testing must be done underwater to reduce the very high radiation exposure to personnel.

If a fuel rod fails, it is expected that the majority of the gas will escape and the remaining will equalize with external water pressure ( ≈ 103500 N/m² (15 psi) outside the reactor core where testing would occur).

In the tests a broadband pulse was launched by the transmitter with most of its energy in the 50 Khz to 1 Mhz range. The pulse was detected with two channels having different bandpass filters preferably 100-300 Khz and 600-1200 Khz. Transducer spacing of about 15 cm (six inches) apart was preferable. It is also preferable that the transducer spacing cover as much of the plenum area as possible (typically 15 cm (six inches) to 27.5 cm (11 inches)). The transducers had a center frequency of 300 Khz. The received signal was digitized and used to calculate a frequency spectrum using the Fast Fourier Transform (FFT).

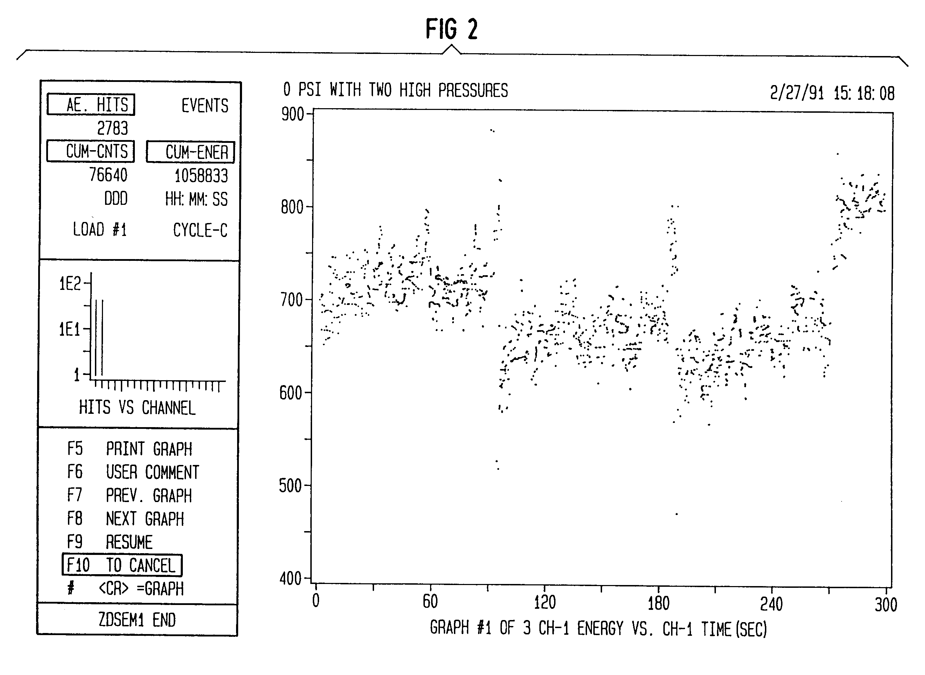

Referring to Figure 2, a frequency spectrum display of 100-300 Khz depicted based on measurements of a 0 N/m² (psi) rod and two 27 x 10⁵ N/m² (390 psi) pressure rods indicates desired, repeatable correlation with internal fuel rod pressure. The left set of scatter data points represent 0 N/m² (psi) while the right sets are from two different 27 x 10⁵ N/m² (390 psi) rods. The vertical (y offset) of the mean of the scatter plots represents the difference in attenuation factors.

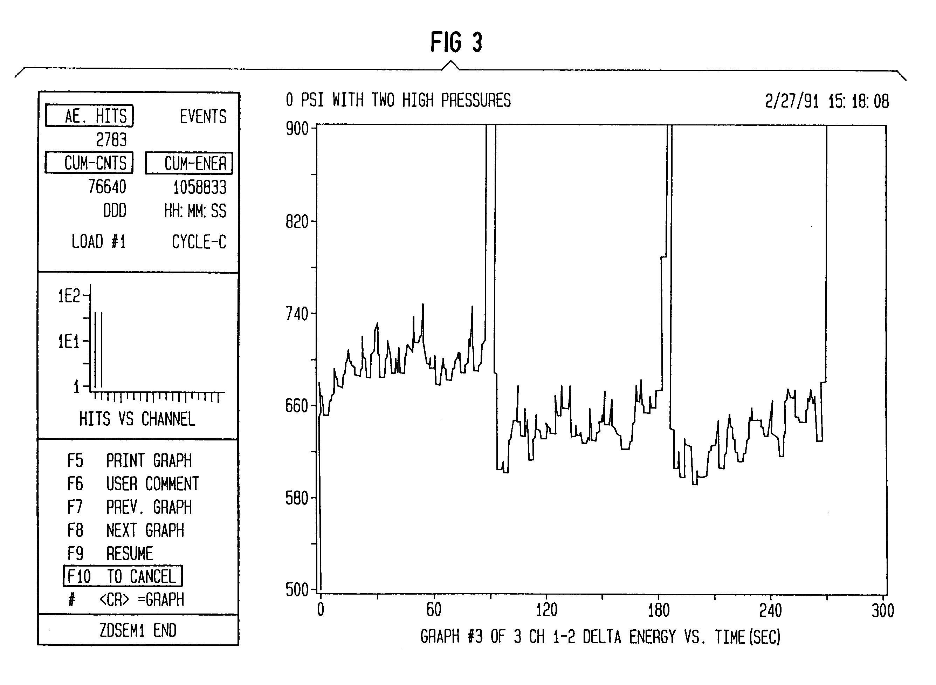

In Figure 3, the difference between 100 Khz-300 Khz and 600-1200 Khz energy values for the same three rods is shown which indicates the desired correlation with less scatter (0 N/m² (psi) on the left). In both Figures 2 and 3, the 0 N/m² (psi) condition is clearly distinguishable from high pressure conditions.

The measurement process is based on the ability to measure small variations in the acoustic velocity and attenuation of Plate - versus - Longitudinal waves. These variations, it is believed, are proportional to the cladding stress and cause wave interactions at the receiving transducer. The frequencies determined during the test which gave best attenuation ratios were 100-300 Khz v. 600-1200 Khz although the present invention is not specifically limited to these ranges. As understood, the system of the invention is not intended to provide a measurement standard but rather to determine individual rod failures based on the signal amplitude population distribution of individual fuel assemblies.

This would normalize perturbations caused by variable fission gas release (slight pressure differentials between individual rods).

While the foregoing description and drawings represent the preferred embodiments of the present invention, it will be obvious to those skilled in the art that various changes and modifications may be made therein without departing from the scope of the claims.

## Claims

1. A system for the detection of failed nuclear fuel rods comprising:
transmitter means for providing a source of pulsed electrical energy;
first transducer means responsive to said transmitter means for applying pulsed ultrasonic energy of a specified frequency directly to the external cladding of a nuclear fuel rod;
second transducer means, spaced apart from said first transducer means, for receiving ultrasonic energy transmitted through and along said fuel rod and for providing an electrical signal in response thereto, said transducer means being positioned adjacent the external cladding of said nuclear fuel rod;
receiving means responsive to said signal from said second transducer, for processing high and low frequency components of said signal and for providing an output signal; and
a gated multi-channel spectrum analyzer, responsive to said output signal from said receiving means, for determining the spectral component of the received ultrasonic energy over a lower and a higher frequency range and for producing resultant signals proportional to the amplitude of each frequency component, said resultant signals being a measure of the stress of the cladding and consequent pressure differentials so that any loss of fuel rod gas pressure will be a direct measure of fuel cladding failure.

2. The system of claim 1 wherein the transmitter means provides pulsed signals at a frequency of approximately 300 Khz.

3. The system of claim 1 wherein said second transducer means is a wide band receiver.

4. The system of claim 1 wherein said spectrum analyzer analyzes signals in a lower frequency range of about 100-300 Khz and signals in a higher frequency range of about 600-1200 Khz.

5. The system of claim 1 wherein said first transducer means applies broadband pulses in the 50 Khz to 1 Mhz range.

6. The system of claim 1 wherein said fuel rods are immersed in a water bath.

7. The system of claim 1 wherein said resultant signals represent an attenuation change of the lower range of frequencies.

8. The system of claim 1 wherein said receiving means includes an amplifier portion and high and low bandpass filters.

9. A method for detection of failed nuclear rods comprising:
applying broadband pulses of ultrasonic energy to a nuclear fuel rod;
sensing, in response to said applied ultrasonic energy, the measured ultrasonic response of said rod;
converting such measured response to an electrical signal;
determining by spectral analysis the spectral component of said electrical signal over a lower and a higher frequency range and producing resultant signals proportional to the amplitude of each frequency component;
wherein said resultant signals are a measure of the stress of the cladding of the rod and consequent pressure differential so that any loss of fuel rod gas pressure will be a direct measure of fuel cladding failure.

## Patentansprüche

1. System zur Erkennung fehlerhafter Kernbrennstäbe mit:
Sendermitteln zum Bereitstellen einer Quelle gepulster elektrischer Energie;
ersten auf besagte Sendermittel reagierenden Wandlermitteln zum direkten Anlegen gepulster Ultraschallenergie angegebener Frequenz an die Außenhülle eines Kernbrennstabes;
zweiten von den besagten ersten Wandlermitteln beabstandeten Wandlermitteln zum Empfangen von durch den und entlang dem besagten Brennstab übertragener Ultraschallenergie und zur Bereitstellung eines elektrischen Signals als Reaktion darauf, wobei die besagten Wandlermittel neben der Außenhülle des besagten Kernbrennstabes angeordnet sind;
auf das besagte Signal vom besagten zweiten Wandler reagierenden Empfangsmitteln zum Verarbeiten von Hoch- und Niederfrequenzkomponenten des besagten Signals und zur Bereitstellung eines Ausgangssignals; und
einem auf das besagte Ausgangssignal von den besagten Empfangsmitteln reagierenden getasteten Mehrkanal-Spektrumanalysator zur Bestimmung der Spektralkomponente der Ultraschallempfangsenergie über einen niedrigeren und einen höheren Frequenzbereich und zur Erzeugung von zur Amplitude jeder Frequenzkomponente proportionalen resultierenden Signalen, wobei die besagten resultierenden Signale ein Maß der Spannung der Hülle und sich daraus ergebenden Druckdifferenzen sind, so daß jeder Verlust von Brennstabgasdruck ein direktes Maß eines Brennstoffhüllenausfalls ist.

2. System nach Anspruch 1, wobei das Sendermittel gepulste Signale mit einer Frequenz von circa 300 kHz bereitstellt.

3. System nach Anspruch 1, wobei das besagte zweite Wandlermittel ein Breitbandempfänger ist.

4. System nach Anspruch 1, wobei der besagte Spektrumanalysator Signale in einem niedrigeren Frequnzbereich von circa 100-300 kHz und Signale in einem höheren Frequenzbereich von circa 600-1200 kHz analysiert.

5. System nach Anspruch 1, wobei das besagte erste Wandlermittel Breitbandimpulse im Bereich 50 kHz bis 1 MHz anlegt.

6. System nach Anspruch 1, wobei die besagten Brennstäbe in ein Wasserbad eingetaucht sind.

7. System nach Anspruch 1, wobei die besagten resultierenden Signale eine Dämpfungsänderung des niedrigeren Frequenzbereichs darstellen.

8. System nach Anspruch 1, wobei das besagte Empfangsmittel einen Verstärkerteil und Hoch- und Tief-Bandpaßfilter enhält.

9. Verfahren zur Erkennung von fehlerhaften Kernbrennstäben mit:
Anlegen von Breitbandimpulsen von Ultraschallenergie an einen Kernbrennstab;
Abfühlen der gemessenen Ultraschallantwort des besagten Stabes als Reaktion auf die besagte angelegte Ultraschallenergie;
Verwandeln dieser gemessenen Antwort in ein elektrisches Signal;
Bestimmen der Spektralkomponente des besagten elektrischen Signals durch Spektralanalyse über einen niedrigeren und einen höheren Frequenzbereich und Erzeugen von zur Amplitude jeder Frequenzkomponente proportionalen resultierenden Signalen;
wobei die besagten resultierenden Signale ein Maß der Spannung der Hülle des Stabes und sich daraus ergebenden Druckdifferenz sind, so daß jeder Verlust von Brennstabgasdruck ein direktes Maß eines Brennstoffhüllenausfalls ist.

## Revendications

1. Dispositif destiné à détecter des crayons combustibles défectueux comprenant :
- des moyens de transmission destinés à constituer une source d'énergie électrique pulsée ;
- un premier transducteur sensible à des moyens de transmission destinés à appliquer de l'énergie ultrasonore pulsée d'une fréquence donnée directement à la gaine extérieure d'un crayon combustible nucléaire ;
- un second transducteur à distance du premier transducteur, destiné à recevoir de l'énergie ultrasonore transmise par l'intermédiaire des crayons combustibles et le long de ceux-ci, et destiné à fournir un signal électrique en réponse à cette réception, ces transducteurs étant disposés adjacents à la gaine extérieure du crayon combustible nucléaire ;
- des moyens de réception sensibles au signal provenant du second transducteur et destinés à traiter des composantes à haute et basse fréquence du signal et à fournir un signal de sortie;
- un analyseur de spectre multi-canaux à déclenchement, sensible à ce signal de sortie provenant des moyens de réception et destiné à déterminer la composante spectrale de l'énergie ultrasonore reçue dans une plage de fréquence haute et dans une plage de fréquence basse et à produire des signaux proportionnels à l'amplitude de chaque composante de fréquence, ces signaux résultants constituant une mesure de la contrainte de la gaine et des différences de pression qui en découlent de sorte que toute baisse de la pression des gaz d'un crayon combustible sera une mesure directe de la défectuosité de la gaine de combustible.

2. Dispositif suivant la revendication 1, dans lequel les moyens de transmission fournissent des signaux pulsés à une fréquence d'environ 300 KHz.

3. Dispositif suivant la revendication 1, dans lequel le second transducteur consiste en un récepteur à large bande.

4. Dispositif suivant la revendication 1, dans lequel l'analyseur de spectre analyse des signaux dans une plage basse de fréquence d'environ 100 à 300 KHz et des signaux dans une plage haute de fréquence d'environ 600 à 1200 KHz.

5. Dispositif suivant la revendication 1, dans lequel le premier transducteur applique des impulsions à bande large dans la plage de 50 KHz à 1 MHz.

6. Dispositif suivant la revendication 1, dans lequel les crayons combustibles sont immergés dans un bain d'eau.

7. Dispositif suivant la revendication 1, dans lequel les signaux résultants représentent un changement par atténuation de la plage basse de fréquence.

8. Dispositif suivant la revendication 1, dans lequel les moyens de réception comprennent une partie amplificatrice et des filtres à bande passante haute et basse.

9. Procédé de détection des crayons combustibles défectueux, qui consiste :
- à appliquer des impulsions à bande large d'énergie ultrasonore à des crayons combustibles nucléaires ;
- à détecter, en réponse à l'énergie ultrasonore appliquée, la réponse ultrasonore mesurée du crayon ;
- à convertir cette réponse mesurée en un signal électrique ;
- à déterminer par analyse spectrale la composante spectrale du signal électrique sur une plage basse de fréquence et sur une plage haute de fréquence et à produire des signaux résultants proportionnels à l'amplitude de chaque composante de fréquence ;
ces signaux résultants représentant une mesure de la contrainte subie par la gaine du crayon et de la différence de pression qui en découle de sorte que toute baisse de pression des gaz du crayon combustible représentera une mesure directe de la défectuosité de la gaine de combustible.
